# EUROPÄISCHE PATENTANMELDUNG

(11) **EP 1 508 760 A2**
(43) Veröffentlichungstag der Anmeldung: **23.02.2005**
(21) Anmeldenummer: 04019053.0
(22) Anmeldetag: 11.08.2004
(51) Int. Cl.: F25D 27/00

(54) **Beleuchtungsvorrichtung für eine Kühleinrichtung**

(30) Priorität: 22.08.2003 DE 10338661
(71) Anmelder: Elektromanufaktur Zangenstein, Hanauer GmbH & Co. KGaA, 92507 Nabburg (DE)
(72) Erfinder: Malecki, Viktor, 91126 Schwabach (DE); Förster, Wolfgang, 92431 Neunburg vorm Wald (DE); Irlbacher, Josef, 92507 Nabburg (DE)
(74) Vertreter: von Hellfeld, Axel, Dr. Dipl.-Phys.

(57) **Zusammenfassung**

Die Erfindung betrifft eine Beleuchtungsvorrichtung für eine Kühleinrichtung, insbesondere einen Kühlschrank, mit zumindest einem langgestreckten transparenten Körper (12, 14), zumindest einer LED (16, 18), die an oder nahe einer Stirnfläche (74, 76) des Körpers angeordnet ist, um von der LED emittiertes Licht in den Körper einzukoppeln, wobei eine sich in Längsrichtung des Körpers erstreckende erste Teilfläche (70) der Oberfläche des Körpers gestaltet ist, um in den Körper eingekoppeltes Licht so zu streuen und/oder zu brechen und/oder zu reflektieren, dass es in Richtung auf eine der ersten Teilfläche gegenüberliegende zweite Teilfläche (72) des Körpers gelenkt wird und aus dem Körper austritt, wobei die LED (16, 18) auf ihrer vom Körper (12, 14) abgekehrten Seite in gut wärmeleitendem Kontakt mit einem Leitblech (20, 22) steht, das sich die erste Teilfläche (70) im wesentlichen überdeckend entlang dieser erstreckt.

## Beschreibung

Die Erfindung betrifft eine Beleuchtungsvorrichtung für eine Kühleinrichtung, insbesondere einen Kühlschrank oder dergleichen, d.h. zum Beispiel ein Kühlregal, Tiefkühlfach oder Tiefkühlschrank. Dabei weist die Beleuchtungsvorrichtung zumindest einen langgestreckten transparenten Körper auf und zumindest eine LED, die an oder nahe einer Stirnfläche des Körpers angeordnet ist, um von der LED emittiertes Licht in den Körper einzukoppeln, wobei eine sich in Längsrichtung des Körpers erstreckende erste Teilfläche der Oberfläche des Körpers gestaltet ist, um in den Körper eingekoppeltes Licht so zu streuen und/oder zu brechen und/oder zu reflektieren, dass es in Richtung auf eine der ersten Teilfläche gegenüberliegende zweite Teilfläche des Körpers gelenkt wird und aus dem Körper austritt.

Bei einer Vielzahl von Anwendungen, nicht nur bei Kühlmöbeln oder dergleichen, ist eine effektive Verteilung der erzeugten elektromagnetischen Strahlung (hier als Licht bezeichnet) gefordert. Die Strahlung muss im auszuleuchtenden Bereich möglichst gleichmäßig und ohne Blendwirkung verteilt werden.

Als höchst effektive Lichtquellen stehen seit einiger Zeit sogenannte LEDs zur Verfügung, also Halbleiterbauelemente, die bei Stromfluss Licht aussenden.

Eine Beleuchtungsvorrichtung der eingangs genannten Art ist aus der US 2003/0072147 A1 bekannt. Dort wird mittels einer Mehrzahl von LEDs Licht in einen transparenten Körper eingekoppelt und eine Teilfläche des Körpers ist mit Farbe belegt, um Licht auf die gegenüberliegenden Seite zu lenken, wo das Licht aus dem Körper zu Beleuchtungszwecken austritt.

Die Veröffentlichung von A.M. Blumenfeld und S.E. Jones in der Zeitschrift MASCHINE DESIGN, "Parts that glow", Oktober 1959, S. 94-103, beschreibt allgemein die Einkopplung von Licht in langgestreckte transparente Körper und damit verbundene verschiedene Beleuchtungstechniken.

Die US 6,601,984 B2 zeigt ebenfalls eine Beleuchtungsvorrichtung mit einem langgestreckten transparenten Körper, in dessen Stirnfläche (n) aus LEDs Licht eingekoppelt wird. Um das Licht aus dem transparenten Körper herauszuleiten, sind im Körper eine Vielzahl von Einkerbungen vorgesehen, an denen das Licht reflektiert wird.

Die DE 198 03 518 A1 beschreibt einen stabförmigen Lichtleiter, der ebenfalls an einem Rand mit prismenförmigen Einkerbungen versehen ist, um Licht daran zu reflektieren.

Die DE 72 44 920 U1 beschreibt eine Beleuchtungseinrichtung für einen Kühlschrank, bei der eine Lichtquelle in der Wandung des Kühlschrankes angeordnet ist, aus welcher Licht in eine Lichtleiterschiene eingekoppelt wird, die mit einer Vielzahl von Einkerbungen versehen ist, um das Licht im Inneren des Kühlschranks zu verteilen.

Der Erfindung liegt die Aufgabe zugrunde, eine Beleuchtungsvorrichtung der eingangs genannten Art so auszugestalten, dass bei einfacher Montage eine hohe Lebensdauer der LEDs bei gleichzeitig guter optischer Wirkung erreicht wird.

Zu Lösung dieser Aufgabe lehrt die Erfindung eine Beleuchtungsvorrichtung für eine Kühleinrichtung, insbesondere einen Kühlschrank, mit zumindest einem langgestreckten transparenten Körper, zumindest einer LED, die an oder nahe einer Stirnfläche des Körpers angeordnet ist, um von der LED emittiertes Licht in den Körper einzukoppeln, wobei eine sich in Längsrichtung des Körpers erstreckende erste Teilfläche der Oberfläche des Körpers gestaltet ist, um in den Körper eingekoppeltes Licht so zu streuen und/oder zu brechen und/oder zu reflektieren, dass es in Richtung auf eine der ersten Teilfläche gegenüberliegende zweite Teilfläche des Körpers gelenkt wird und aus dem Körper austritt, wobei die LED auf ihrer vom Körper abgekehrten Seite in gut wärmeleitendem Kontakt mit einem Leitblech steht, das sich die erste Teilfläche im wesentlichen überdeckend entlang dieser erstreckt.

Das erfindungsgemäße Leitblech erfüllt wärmetechnische und/oder optische Zwecke. Wärmetechnisch dient es dazu, die von der LED erzeugte Wärme großflächig zu verteilen und so die Lebensdauer der LED zu verlängern. Auch werden unerwünschte Temperaturgradienten in der Wand des Kühlschrankes weitgehend reduziert. Optisch kann des Leitblech dazu dienen, Licht in gewünschter Weise durch Reflexion und/oder Farbgebung zu beeinflussen.

Gemäß einer bevorzugten Ausgestaltung der Erfindung ist vorgesehen, dass der transparente Körper zylinderförmig ist und die genannte erste Teilfläche geometrisch entsprechend einem Schnitt durch den Zylinder schräg zu dessen Längsachse definiert ist. Bei dieser Ausgestaltung des transparenten Körpers wird in sehr einfacher Weise eine homogene Verteilung des Lichtes erreicht, insbesondere dann, wenn die erste Teilfläche mit Farbstreifen quer zur Längsrichtung des Körpers versehen ist, an denen das Licht gestreut wird. Damit kann eine weitgehend gleichmäßige Emission des Lichtes über die gesamte Längserstreckung des transparenten Körpers erreicht werden.

Eine besondere Ausgestaltung der Erfindung sieht vor, dass in einem Gehäuse zwei transparente Körper koaxial angeordnet sind. Dies ermöglicht eine sehr langgestreckte Verteilung des Lichtes und damit eine sehr gleichmäßige und umfassende Ausleuchtung des Innenraumes des Kühlmöbels. Bei einer solchen koaxialen Anordnung der transparenten Körper sind LEDs bevorzugt auf der gemeinsamen Achse beider Körper angeordnet, entweder außenseitig an den Stirnflächen der Körper, also an den voneinander abgekehrten Seiten, oder bevorzugt, an den einander zugekehrten Enden der beiden Körper. Die letztgenannte Anordnung ermöglicht insbesondere eine vereinfachte elektrische Zuleitung und Versorgung der LEDs und überdies auch eine platzsparende Gestaltung des Gehäuses, in dem die transparenten Körper und die LEDs angeordnet sind.

Die Erfindung betrifft auch den transparenten Körper als solchen, der zylinderförmig gestaltet und mit einer ersten Teilfläche versehen ist, die das eingekoppelte Licht streut oder reflektiert, sodass es aus dem Körper austritt, wobei diese erste Teilfläche entsprechend einem Schnitt durch den Zylinder schräg zu dessen Längsachse definiert ist. Auf dieser Teilfläche können bevorzugt Farbstreifen angebracht werden, an denen in den Körper eintretendes Licht gestreut oder reflektiert wird. Diese Farbstreifen können zum Beispiel in Längsrichtung oder bevorzugt in Querrichtung, bezogen auf die Längsachse, mit unterschiedlichen Abständen jeweils angeordnet werden, um die Lichtmengen zu steuern.

Nachfolgend werden Ausführungsbeispiele der Erfindung anhand der Zeichnung näher erläutert. Es zeigen:
- Figur 1: ein erstes Ausführungsbeispiel einer Beleuchtungsvorrichtung in der Wand eines Kühlschrankes;
- Figur 2: ein weiteres Ausführungsbeispiel einer Beleuchtungsvorrichtung mit einem transparenten Körper;
- Figur 3: ein weiteres Ausführungsbeispiel einer Beleuchtungsvorrichtung mit zwei transparenten Körpern und zentraler Anordnung von LEDs; und
- Figur 4: ein Ausführungsbeispiel eines transparenten Körpers.

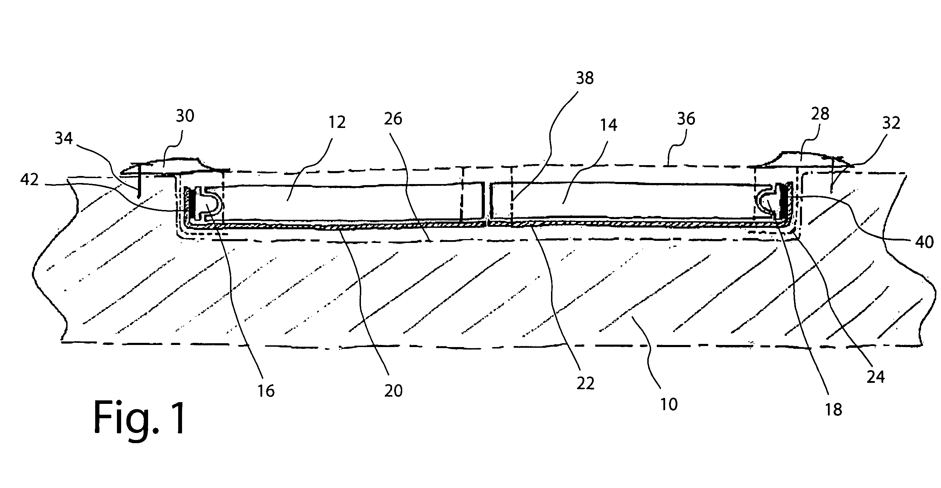

Gemäß Figur 1 wird in der Wand 10 eines Kühlschrankes eine Beleuchtungsvorrichtung installiert.

Die Beleuchtungsvorrichtung weist zwei koaxial angeordnete, langgestreckte transparente Körper 12 auf, die Zylinderform haben, vorzugsweise Kreiszylinderform. An den äußeren Stirnenden der transparenten Körper 12, 14 ist jeweils eine LED 16 bzw. 18 so angeordnet, dass das von der LED emittierte Licht weitgehend in den Körper 12 bzw. 14 eingekoppelt wird.

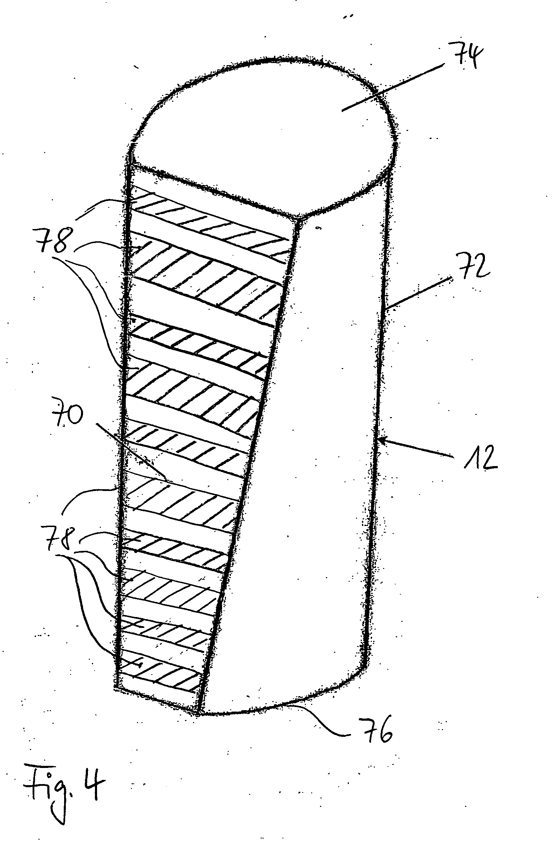

Jede der LEDs ist mit einem Leitblech 20 bzw. 22 gut wärmeleitend verbunden, sodass beim Betrieb der LEDs entstehende Wärme großflächig über die Leitbleche verteilt wird. Die Breite der Leitbleche 20, 22 (also ihre Dimension senkrecht zur Zeichnungsebene) ist bei dem Ausführungsbeispiel so gewählt, dass das Leitblech den zugehörigen Körper im wesentlichen abdeckt, zum Beispiel kann die Breite eines Leitbleches etwa dem Durchmesser der Körper 12 bzw. 14 in dieser Richtung entsprechen. Auch in Längsrichtung decken die Leitbleche 20, 22 die Körper 12 bzw. 14 im wesentlichen über deren gesamte Längserstreckung ab. Eine besondere Ausgestaltung der Körper 12 und 14 wird weiter unten anhand der Figur 4 näher beschrieben.

Die vorstehend beschriebenen Komponenten 12, 14, 16, 18, 20, 22 sind in einem Gehäuse 24 aus Kunststoff angeordnet, und werden vor dem Einbau in die Kühlschrankwand 20 als abgeschlossene Baugruppe vormontiert. Das Kunststoffgehäuse 24 wird in eine passgenaue Vertiefung 26 in der Kühlschrankwand 20 eingesetzt. Das Gehäuse 24 weist Abdeckrahmen 28, 30 auf, sodass das Gehäuse 24 mittels Schrauben 32, 34 an der Kühlschrankwand 10 befestigbar ist.

Das Gehäuse 24 ist auf seiner dem Inneren des Kühlschrankes zugekehrten Seite (in Figur 1 also oben) offen, sodass aus den Körpern 12, 14 austretendes Licht den Innenraum des Kühlschrankes ausleuchtet. Diese Öffnung im Gehäuse 24 wird von einem Rand 36 umgeben, der sich auf dem Rand der Vertiefung 26 in der Kühlschrankwand 10 abstützt. Zur stabileren Montage sowohl der transparenten Körper 12, 14 als auch der Leitbleche 20, 22 ragen Stege 38 in das Innere des Gehäuses 24 an denen sich die genannten Bauteile abstützen.

Zwischen den LEDs 16, 18 und den Leitblechen 20, 22 sind gut wärmeleitenden Kontakte 40, 42 vorgesehen.

Bei der Ausführungsform gemäß Figur 1 befinden sich die beiden LEDs 16, 18 an den äußeren Stirnenden der koaxial angeordneten transparenten Körper 12, 14.

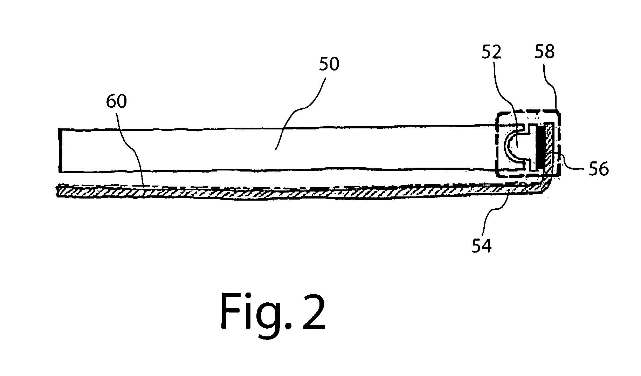

Figur 2 zeigt eine abgewandelte Ausführungsform einer Beleuchtungsvorrichtung mit nur einem transparenten Körper 50, einer LED 52, einem Leitblech 54, einem gut wärmeleitenden Kontakt 56, eine Halterung 58, und einer Beschichtung 66 auf dem Leitblech 54. Die Beschichtung 60 kann zum Beispiel eine Verspiegelung sein, sodass Licht in effektiver Weise in die gewünschte Richtung gelenkt wird, in Figur 2 nach oben, analog Figur 1 in das Innere des Kühlschranks. Ansonsten wird eine Beleuchtungsvorrichtung gemäß Figur 2 ähnlich der Anordnung gemäß Figur 1 mit der Halterung 58 in einer Vertiefung in einer Kühlschrankwand (in Figur 2 nicht gezeigt) montiert.

Gemäß Figur 2 bilden das Leitblech 54, der wärmeleitende Kontakt 56, die LED 52 und der transparente Körper 50 eine Baugruppe, die in dieser Zusammensetzung durch die Halterung 58 zusammengehalten wird. Die Halterung 58 kann dann insgesamt mit den genannten Bauteilen in ein geeignetes Gehäuse eingesetzt werden, etwa entsprechend dem Gehäuse 36 nach Figur 1, sodass dann die Beleuchtungsvorrichtung insgesamt in eine Vertiefung in einer Kühlschrankwand (in Figur 2 nicht gezeigt) eingesetzt werden kann. Die beschriebene Konstruktion mit der Halterung 58 ermöglicht es, den transparenten Körper 50 mit gutem Kraftschluss gegen die LED 52 zu drücken, wobei das Leitblech 54, das fest mit der Halterung 58 verbunden ist, ein stabiles Widerlager bildet.

Bei den Ausführungsbeispielen gemäß Figur 1 und Figur 2 werden die LEDs 16, 18, 52 über elektrische Zuführleitungen aus der Wand 10 des Kühlschrankes versorgt.

Die Leitbleche 20, 22, 54 bestehen vorzugsweise aus einem gut wärmeleitenden Metall, wie Kupfer, gegebenenfalls mit einer Verspiegelung auf ihrer dem transparenten Körper zugekehrten Seite.

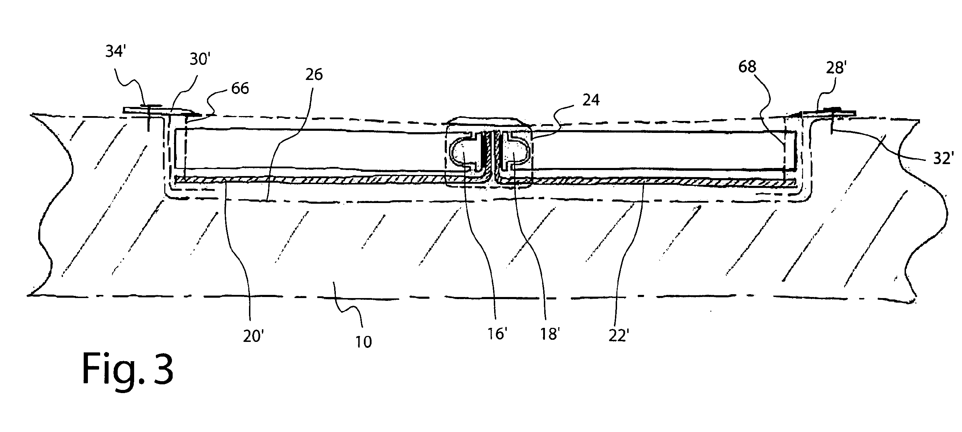

Figur 3 zeigt eine Abwandlung des Ausführungsbeispieles nach Figur 1, wobei einander funktionsgleiche oder funktionsähnliche Bauteile mit den gleichen Bezugszeichen versehen sind, gegebenenfalls um einen Strich ergänzt. Beim Ausführungsbeispiel nach Figur 3 sind die beiden LEDs 16', 18' jeweils an den einander zugekehrten Stirnflächen der transparenten Körper angeordnet. Dies ermöglicht eine kompakte Unterbringung der LEDs 16', 18' auf engstem Raum und erlaubt eine sehr einfache Anordnung der elektrischen Zuführleitungen. Zwei Stege 66, 68 des Gehäuses 24 stützen die transparenten Körper an ihren von den LEDs 16', 18' entfernten Enden ab. Ansonsten entspricht das Ausführungsbeispiel gemäß Figur 3 dem oben beschriebenen Ausführungsbeispiel gemäß Figur 1, sodass auf eine wiederholte Beschreibung verzichtet werden kann.

Figur 4 zeigt schematisch einen transparenten Körper 12, der in den Beleuchtungsvorrichtungen gemäß den Figuren 1, 2 und 3 (Bezugszeichen 12, 14, 50) verwendet werden kann. Der transparente Körper aus zum Beispiel Acryl oder dergleichen, hat im wesentlichen Kreiszylinderform, wobei eine erste Teilfläche 70 durch einen Schnitt durch den Zylinder schräg zu dessen Längsachse gebildet ist. Die erste Teilfläche 70 ist so gestaltet, dass in den Körper eingekoppeltes Licht einer LED gestreut und/oder gebrochen und/oder reflektiert wird, und zwar so, dass es über eine der ersten Teilfläche 70 gegenüberliegende zweite Teilfläche 72 des Körpers aus dem Körper austritt. Bei den Beleuchtungsvorrichtungen gemäß den Figuren 1, 2 und 3 wäre also die erste Teilfläche 70 unten angeordnet und die zweite Teilfläche 72 oben in Richtung auf den Innenraum des Kühlschrankes.

Beim Ausführungsbeispiel des transparenten Körpers 12 gemäß Figur 4 wird eine LED an der unteren Stirnfläche 76 des Körpers montiert, sodass dort das Licht in den Körper eingekoppelt wird. Die erste Teilfläche 70 bewirkt dann über einen streifenförmigen Farbauftrag 78 eine Reflexion der eingekoppelten Strahlung in Richtung auf die gegenüberliegende zweite Teilfläche 72. Die dargestellte Gestaltung der ersten Teilfläche 70, die sich in Richtung auf die der LED gegenüberliegende Stirnfläche 74 aufweitet, bewirkt, dass Licht weitestgehend homogen (gleichmäßig) in Richtung auf die zweite Teilfläche 72 gelenkt wird. Die farbigen Streifen 78, die bevorzugt weiß sind, haben unterschiedliche Längsabmessungen, sodass ein gewünschter optischer Effekt bei der Ausleuchtung des Kühlschrankinnenraumes erzielt wird. Zwischen den Streifen 78 nach hinten (in den Figuren 1 bis 3 nach unten) gelangendes Licht wird gegebenenfalls an der verspiegelten Fläche eines der Leitbleche reflektiert und gelangt auf diese Weise ebenfalls in den Innenraum.

## Patentansprüche

1. Beleuchtungsvorrichtung für eine Kühleinrichtung, insbesondere einen Kühlschrank, mit zumindest einem langgestreckten transparenten Körper (12, 14), zumindest einer LED (16, 18), die an oder nahe einer Stirnfläche (74, 76) des Körpers angeordnet ist, um von der LED emittiertes Licht in den Körper einzukoppeln, wobei eine sich in Längsrichtung des Körpers erstreckende erste Teilfläche (70) der Oberfläche des Körpers gestaltet ist, um in den Körper eingekoppeltes Licht so zu streuen und/oder zu brechen und/oder zu reflektieren, dass es in Richtung auf eine der ersten Teilfläche gegenüberliegende zweite Teilfläche (72) des Körpers gelenkt wird und aus dem Körper austritt, **dadurch gekennzeichnet, dass** die LED (16, 18) auf ihrer vom Körper (12, 14) abgekehrten Seite in gut wärmeleitendem Kontakt mit einem Leitblech (20, 22) steht, das sich die erste Teilfläche (70) zumindest teilweise überdeckend entlang dieser erstreckt.

2. Beleuchtungsvorrichtung nach Anspruch 1, **dadurch gekennzeichnet, dass** der Körper (12, 14) zylinderförmig ist und die erste Teilfläche (70) geometrisch entsprechend einem Schnitt durch den Zylinder schräg zu dessen Längsachse definiert ist.

3. Beleuchtungsvorrichtung nach einem der Ansprüche 1 oder 2, **dadurch gekennzeichnet, dass** auf der ersten Teilfläche (70) Farbstreifen (78), insbesondere in weißer Farbe, quer zur Längsrichtung des Körpers (12, 14) aufgetragen sind.

4. Beleuchtungsvorrichtung nach einem der vorhergehenden Ansprüche, **dadurch gekennzeichnet, dass** in einem Gehäuse (24) zwei transparente Körper (12, 14) koaxial angeordnet sind.

5. Beleuchtungsvorrichtung nach Anspruch 4, **dadurch gekennzeichnet, dass** LEDs auf der gemeinsamen Achse beider Körper angeordnet sind.

6. Beleuchtungsvorrichtung nach Anspruch 5, **dadurch gekennzeichnet, dass** LEDs an den einander zugekehrten Enden der beiden Körper (12, 14) angeordnet sind.

7. Beleuchtungsvorrichtung nach einem der vorhergehenden Ansprüche, **dadurch gekennzeichnet, dass** das Leitblech (20, 22) strahlungsreflektierend ist.

8. Transparenter Körper (12, 14) für eine Beleuchtungsvorrichtung, wobei der Körper eine sich in Längsrichtung erstreckende erste Teilfläche (70) aufweist, um in den Körper eingekoppeltes Licht so zu streuen und/oder zu brechen und/oder zu reflektieren, dass es in Richtung auf eine der ersten Teilfläche gegenüberliegenden zweiten Teilfläche (72) des Körpers gelenkt wird und aus dem Körper austritt, **dadurch gekennzeichnet, dass** der Körper (12, 14) zylinderförmig ist und die erste Teilfläche (70) geometrisch entsprechend einem Schnitt durch den Zylinder schräg zu dessen Längsachse definiert ist.
